# DEMANDE DE BREVET EUROPEEN

(11) **EP 1 887 258 A1**
(43) Date de publication de la demande: **13.02.2008**
(21) Numéro de dépôt: 07301287.4
(22) Date de dépôt: 01.08.2007
(51) Int. Cl.: F16H 61/28, F16H 59/68

(54) **Procédé de détermination des positions de début et de fin d'un d'emboîtement d'un crabot et boîte de vitesses estimant une position de début et de fin de crabotage au passage d'un rapport**

(30) Priorité: 01.08.2006 FR 0607030
(71) Demandeur: PEUGEOT CITROËN AUTOMOBILES S.A., 78140 Velizy Villacoublay (FR)
(72) Inventeur: Schaeffer, Eric, 92250 La Garenne Colombes (FR)

(57) **Abrégé**

La présente invention concerne un procédé de détermination des positions de début et de fin d'emboîtement d'un crabot de boîte de vitesses, notamment de boîte de vitesses mécanique pilotée, l'emboîtement du crabot permettant d'accoupler solidairement un pignon à un arbre, le pignon tournant librement autour de l'arbre et le crabot se déplaçant longitudinalement le long de l'arbre. La présente invention concerne également une boîte de vitesses estimant, selon le procédé, une position de début de crabotage et une position de fin de crabotage au passage d'un rapport.

La boîte de vitesses est caractérisée en ce qu'elle comporte :
- un actionneur pour déplacer directement ou indirectement un crabot le long d'un arbre avec une vitesse suffisamment faible pour qu'il s'immobilise temporairement au moment du début de son emboîtement dans l'arbre ou dans un pignon correspondant au rapport à passer ;
- un capteur de position du crabot ;
- des moyens de calcul de la position d'immobilisation du crabot à partir des positions successives fournies par le capteur, la position d'immobilisation du crabot correspondant à sa position de début de crabotage permettant de déduire la position du crabot en butée correspondant à sa position de fin de crabotage ;
- des moyens de mémorisation de la position de début de crabotage et/ou de la position de fin de crabotage.

Application : automobile

## Description

La présente invention concerne une méthode de détermination des positions de début et de fin d'emboîtement d'un crabot et un dispositif de boîte de vitesses l'utilisant. Elle s'applique par exemple dans le domaine de l'automobile.

Un véhicule automobile équipé d'une boîte de vitesses mécanique pilotée, que l'on appellera BVMP par la suite, permet à son conducteur de changer de rapport de boîte de vitesses sans s'occuper de l'embrayage et du levier de commande de passage de rapports. En effet, pour le passage d'un rapport donné avec une BVMP, les phases de débrayage, changement de rapport et embrayage sont automatisées.
Dans une boîte de vitesses, à chaque pignon est associé un synchroniseur, qui est un dispositif permettant de mettre un pignon à la même vitesse de rotation que l'arbre de transmission qui constitue son axe. Un synchroniseur est généralement traversé par l'arbre de transmission et se déplace longitudinalement le long de cet arbre. Dans une boîte de vitesses, à chaque synchroniseur est associé au moins un crabot, qui est un dispositif permettant d'accoupler solidairement le pignon avec l'arbre de transmission par emboîtement, ceci une fois que le pignon et l'arbre tournent à la même vitesse. Un crabot est également traversé par l'arbre de transmission et se déplace également longitudinalement le long de cet arbre.
Ainsi, le pilotage d'une BVMP lors du passage d'un rapport consiste essentiellement à gérer précisément le déplacement longitudinal d'un synchroniseur et d'un crabot le long de l'arbre de transmission. Ces déplacements se décomposent en différentes phases, notamment la phase de synchronisation et la phase de crabotage, chaque début et chaque fin de phase étant caractérisé par la position du synchroniseur et/ou du crabot le long de l'arbre de transmission.

Actuellement, les stratégies de pilotage de changement de rapport sur les BVMP reposent sur une connaissance a priori des positions du synchroniseur et/ou du crabot caractérisant les différentes phases. Ainsi, une « grille de commande de boîte de vitesses », est mémorisée dans le calculateur de commande de boite de vitesses contenant les positions seuils pour chacun des rapports pouvant être engagé.
Ces positions seuils, sont les différentes positions utilisées par la stratégie de commande de l'actionneur de passage, début de synchronisation début et fin de crabotage, butée de passage. La grille de commande est utilisée par un actionneur de passage, qui est un dispositif motorisé provocant le déplacement longitudinal du synchroniseur et du crabot le long de l'arbre de transmission.

L'un des problèmes techniques est que des positions prédéterminées connues a priori ne garantissent pas, à long terme, des passages de rapports respectant scrupuleusement les conditions fonctionnelles des composants mécaniques sollicités. En effet, les positions seuils et extrêmes réelles du synchroniseur et/ou du crabot en début et en fin de phases sont susceptibles de se décaler avec l'usure des pièces mécaniques.
Certaines BVMP actuelles mettent en oeuvre un mécanisme d'apprentissage du début de la phase de synchronisation. Il s'agit d'actualiser régulièrement les positions seuils et extrêmes des synchroniseurs mémorisées dans la grille de commande de boîte de vitesses. Ainsi, les synchroniseurs sont toujours pilotés en se basant sur des positions qui tiennent compte de l'usure mécanique de la boîte de vitesses. Ceci permet notamment de respecter l'armement et l'essorage des synchroniseurs.
Malheureusement, la phase de crabotage reste pilotée en se basant sur des positions prédéterminées connues a priori et jamais actualisées. Sur les BVMP actuelles, le crabotage reste donc sensible à l'usure des composants mécaniques de la boîte de vitesses. Il est également sensible à la perte de précision d'un capteur renseignant sur la position de l'actionneur de passage. En effet, l'actionneur de passage, qui provoque non seulement le déplacement du synchroniseur mais également le déplacement du crabot, est lui-même muni d'un capteur de position qui mesure indirectement la position du crabot le long de l'arbre. Cette position mesurée est comparée aux positions mémorisées dans la grille de commande pour piloter le crabot. A la longue, les mesures fournies par le capteur perdent en précision et les passages de rapport aussi. Les passages de rapport deviennent alors saccadés et bruyants.

L'invention a notamment pour but de pallier les inconvénients précités. En pilotant de manière adaptée un actionneur de passage sous le contrôle de son capteur de position, l'invention permet de déterminer une position seuil de début de crabotage. Il s'agit essentiellement de créer « un mur de crabotage », c'est-à-dire un à-coup dans le déplacement du crabot le long de l'arbre de transmission, de détecter l'arrêt temporaire ainsi réalisé et d'exploiter judicieusement la connaissance de cette position d'arrêt. A cet effet, l'invention a pour objet un procédé de détermination des positions de début et de fin d'emboîtement d'un crabot, l'emboîtement du crabot permettant d'accoupler solidairement un pignon à un arbre. Le pignon tourne librement autour de l'arbre et le crabot se déplace longitudinalement le long de l'arbre. Le crabot est déplacé le long de l'arbre avec une vitesse suffisamment faible pour qu'il s'immobilise temporairement au moment du début de son emboîtement dans le pignon ou dans l'arbre. La position du crabot en fin d'emboîtement correspondant à sa position de butée est déduite de la position d'immobilisation du crabot le long de l'arbre correspondant à la position de début d'emboîtement.
Avantageusement, la position de début d'emboîtement peut être la position atteinte par le crabot à un instant correspondant au milieu d'un intervalle d'inflexion temporaire des positions successives du crabot fournies par un capteur. La position de fin d'emboîtement du crabot peut être la somme de la position de début d'emboîtement du crabot et d'une course de crabotage.

L'invention concerne également une boîte de vitesses estimant, selon le procédé, une position de début de crabotage et une position de fin de crabotage au passage d'un rapport. Elle comporte un actionneur pour déplacer directement ou indirectement un crabot le long d'un arbre avec une vitesse suffisamment faible pour qu'il s'immobilise temporairement au moment du début de son emboîtement dans l'arbre ou dans un pignon correspondant au rapport à passer. Elle comporte un capteur de position du crabot. Elle comporte également des moyens de calcul de la position d'immobilisation du crabot à partir des positions successives fournies par le capteur, la position d'immobilisation du crabot correspondant à sa position de début de crabotage et permettant de déduire la position du crabot en butée correspondant à sa position de fin de crabotage. Elle comporte aussi des moyens de mémorisation de la position de début de crabotage et/ou de la position de fin de crabotage.
Avantageusement, le capteur de position peut être connecté à l'actionneur dans une boucle fermée d'asservissement.
Avantageusement encore, lorsqu'un rapport est passé sans estimer une position de début et de fin de crabotage, le crabot peut être déplacé le long de l'arbre jusqu'à sa dernière position de fin de crabotage mémorisée, avec une vitesse suffisamment grande pour qu'il ne s'immobilise pas à sa dernière position de début de crabotage mémorisée.

L'invention a encore pour principal avantage qu'elle permet d'éviter des mises à jour logicielles, qui sont actuellement nécessaires pour réapprendre les grilles de commande de boite de vitesses dont les positions mémorisées se décalent avec l'usure des pièces mécaniques.

D'autres caractéristiques et avantages de l'invention apparaîtront à l'aide de la description qui suit faite en regard de dessins annexés qui représentent :
- la figure 1, par un schéma, un exemple de mécanisme de boîte de vitesses mettant en oeuvre l'invention ;
- la figure 2, par un synoptique, un exemple de boucle fermée d'asservissement de la position d'un actionneur selon l'invention ;
- la figure 3, par des graphiques, un passage de rapport durant l'apprentissage de la position de début de crabotage selon l'invention ;
- la figure 4, par des graphiques, un passage de rapport après apprentissage de la position de début de crabotage selon l'invention.

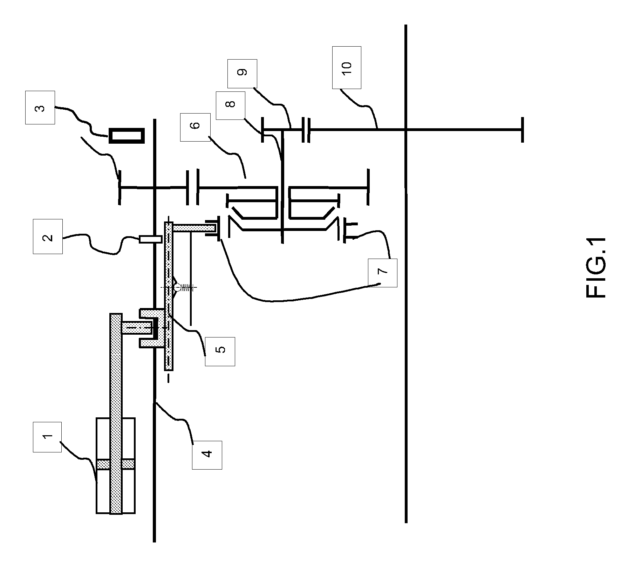

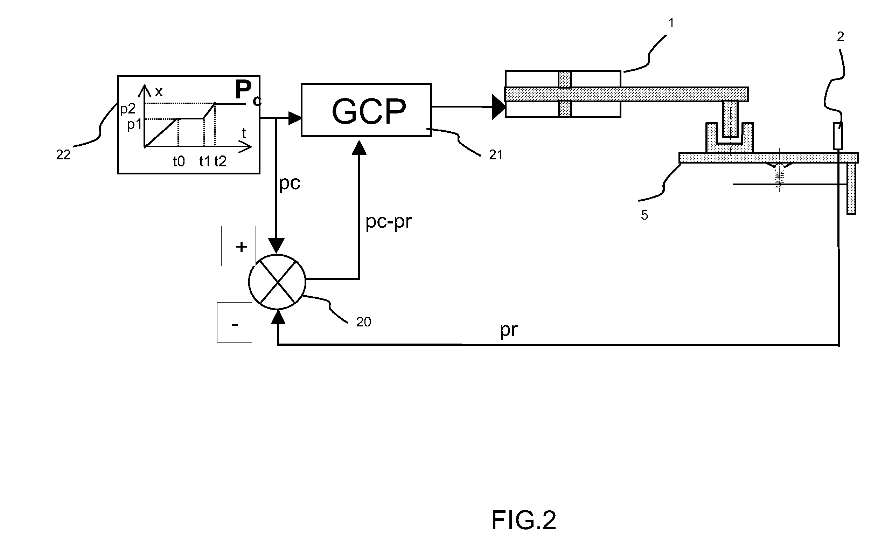

La figure 1 illustre schématiquement un exemple de mécanisme de boîte de vitesses mettant en oeuvre l'invention. Un actionneur de passage 1, appelé simplement « actionneur 1 » par la suite, permet avantageusement le passage des rapports de boîte de vitesses. L'actionneur 1 asservit une fourchette de passage 5 en la poussant longitudinalement le long d'un arbre primaire 4. L'arbre primaire 4 est l'arbre moteur, directement entraîné par un moteur thermique non représenté. La fourchette de passage 5 relie l'actionneur 1 à un manchon 7 de synchronisation et de crabotage. Le contrôle de la position de l'actionneur 1 et de la fourchette 5 est par exemple effectué grâce aux mesures renvoyées par un capteur de position 2, qui peut avantageusement être connecté à l'actionneur 1 dans une boucle fermée d'asservissement, comme illustré par la figure 2 qui suit. Un capteur de vitesse 3 mesure la vitesse de rotation de l'arbre primaire 4. Le capteur 3 contribue également au pilotage de l'actionneur 1, notamment pendant la phase de synchronisation. En effet, il permet de mettre à la même vitesse de rotation l'arbre primaire 4 et, par exemple, un pignon libre 6 autour d'un arbre secondaire 8. Une fois la synchronisation effectuée, le pignon 6 est craboté à l'arbre secondaire 8. L'arbre secondaire 8 est l'arbre de transmission, qui transmet le couple moteur aux roues par l'intermédiaire d'un pont 9,10.

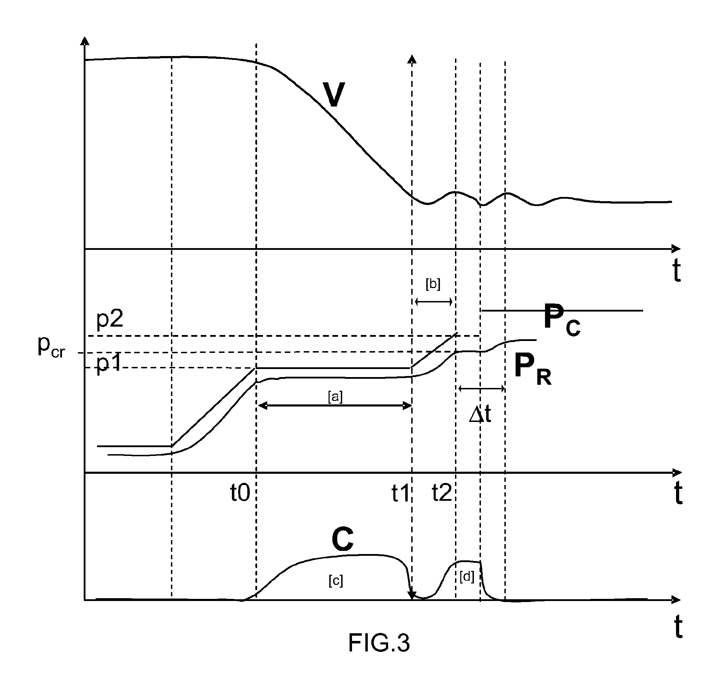

La figure 2 illustre par un synoptique un exemple de boucle fermée d'asservissement de la position de l'actionneur 1 selon l'invention, qui peut être mis en oeuvre dans l'exemple de mécanisme de boîte de vitesses de la figure 1. Un module 21 de génération d'un courant de pilotage (GCP) reçoit une consigne en position 22 concernant l'actionneur 1. La consigne en position 22 est ici représentée graphiquement sous la forme d'une courbe P_{c} dans un repère où l'axe des abscisses représente le temps t et l'axe des ordonnées représente une position x le long de l'arbre primaire 4. La courbe P_{c} montre que la consigne en position qui doit être appliquée à l'actionneur 1 permet le déplacement de la fourchette 5 le long de l'arbre de l'arbre primaire 4 en suivant une cinématique très précise détaillée par la suite. Le module 21 de génération d'un courant de pilotage déduit à tout instant de la consigne en position 22 représentée par la courbe P_{c} un courant permettant d'ajuster le mouvement de l'actionneur 1, pour que la position de l'actionneur 1 soit conforme à une position de consigne instantanée pc déduite de la courbe P_{c}. Le capteur de position 2 mesure ensuite la position réelle de l'actionneur 1 et envoie une mesure pr à un sommateur 20. Le sommateur 20, qui reçoit également la position de consigne instantanée pc, calcule l'écart entre la position de consigne pc et la position réelle pr. L'écart pc-pr est fournit au module 21 de génération du courant de pilotage pour qu'il ajuste en conséquence la position de l'actionneur 1.
La courbe P_{c} montre la cinématique complexe que doit suivre la fourchette 5 poussée par l'actionneur 1. Elle doit être déplacée pour atteindre une position p1 à un instant t0, puis rester immobile à la position p1 jusqu'à un instant t1, et enfin être déplacée pour atteindre une position p2 à un instant t2. En effet, comme illustré par la figure 3 qui suit, l'apprentissage de la position de début de crabotage selon l'invention dépend étroitement de la cinématique de la fourchette 5 le long de l'arbre primaire 4 et donc du pilotage de l'actionneur 1.

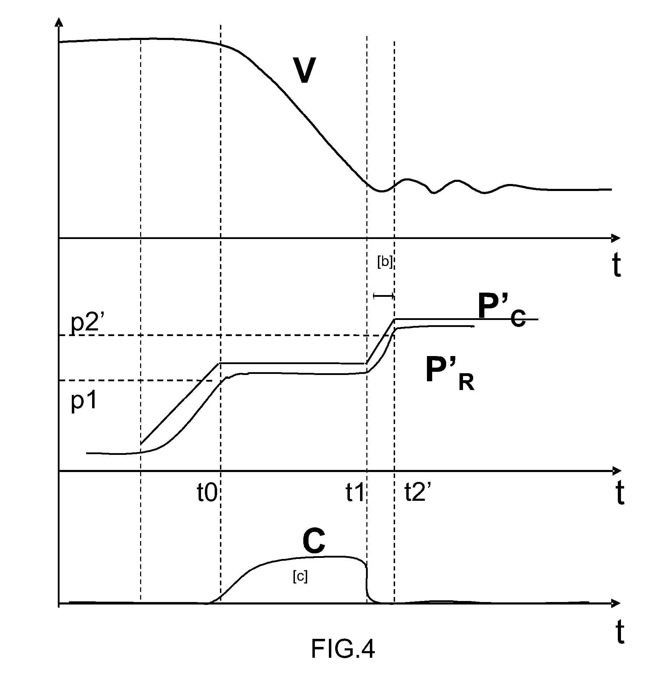

La figure 3 illustre un passage de rapport durant l'apprentissage de la position de début de crabotage selon l'invention mise en oeuvre dans l'exemple de mécanisme de boîte de vitesses des figures 1 et 2. Pour cela, la figure 3 met en parallèle graphiquement la vitesse de rotation de l'arbre primaire 4, la position de l'actionneur 1 le long de l'arbre primaire 4 et le couple transmis au manchon de crabotage 7. La position de l'actionneur 1 est illustrée au centre de la figure 3. La courbe P_{c}, déjà décrite à la figure 1, représente la position de consigne de l'actionneur 1. De plus, une courbe P_{R} représente la position réelle de l'actionneur 1 mesurée par le capteur de position 2, la courbe P_{R} étant dans le même système d'axes que la courbe P_{c.} La vitesse de l'arbre primaire 4 est représentée en haut de la figure 3 par une courbe V dans un système d'axes où l'axe des abscisses représente le temps t et l'axe des ordonnées représente une vitesse de rotation en tours par minute. Le couple transmis au manchon de crabotage 7 est représenté en bas de la figure 3 par une courbe C dans un système d'axes où l'axe des abscisses représente le temps t et l'axe des ordonnées représente un couple en newtons par mètre. L'apprentissage de la position de début de crabotage selon l'invention se déroule en trois étapes.
Tout d'abord, une première étape [a], dite « étape de synchronisation », qui est déclenchée en pilotant l'actionneur 1 de manière à ce qu'il déplace la fourchette 5 jusqu'à la position de consigne p1 à l'instant t0. L'instant t0 est l'instant de début de synchronisation, la position p1 est la position théorique de synchronisation. La chaîne de traction est alors soumise à un couple de torsion [c] dit « couple de synchronisation » comme illustré par la courbe C. Le couple de synchronisation [c] dépend de l'effort appliqué par l'actionneur 1, de l'écart entre la vitesse de l'arbre primaire 4 et la vitesse du pignon 6 à synchroniser et des forces d'inertie qui en découlent. Le couple de synchronisation [c] est supérieur a la valeur nécessaire au passage de rapport. Il est transmis jusqu'aux roues du véhicule. Parallèlement, la vitesse de l'arbre primaire 4 chute comme illustré par la courbe V. L'étape de synchronisation [a] dure jusqu'à l'instant t1, qui est l'instant de fin de synchronisation. A l'instant t1, l'arbre primaire 4 et le pignon 6 tournent à la même vitesse. Durant toute l'étape de synchronisation [a], la position réelle de l'actionneur 1, donnée par la courbe P_{R}, est sensiblement conforme à sa position de consigne donnée par la courbe P_{c}.
Ensuite, survient une deuxième étape [b] dite « de vol libre », qui est déclenchée dès l'instant t1 de fin de synchronisation, en pilotant l'actionneur 1 de manière à ce qu'il reprenne le déplacement de la fourchette 5 jusqu'à la position de consigne p2 à l'instant t2. La position p2 est la position théorique de crabotage. Or, si l'étape de vol libre dure suffisamment longtemps, le couple de synchronisation [c] transmis aux roues remonte vers le manchon de crabotage 7 sous la forme d'un couple de crabotage [d], ce qui demande un effort supplémentaire à l'actionneur 1 pour franchir les entrées de dents de crabotage. Il y a alors apparition d'un « mur de crabotage » se manifestant par un à-coup dans la course de l'actionneur 1, c'est-à-dire un arrêt très bref de l'ordre de 50 à 60 millisecondes. Ainsi, durant l'apprentissage de la position de début de crabotage selon l'invention, la vitesse et l'effort appliqués par l'actionneur 1 sur la fourchette 5 sont-ils soigneusement ajustés pour que la pente de la position de consigne durant l'étape de vol libre [b] soit faible. Par conséquent, l'actionneur 1 suit une consigne en position selon la courbe P_{c}, de manière à parcourir une course de longueur p2-p1 entre la position p1 de synchronisation et la position p2 de crabotage théorique, sur une durée t2-t1 relativement longue entre l'instant t1 de fin de synchronisation et l'instant t2 de crabotage théorique. Le crabotage du rapport cible est ainsi effectué avec une consigne de position suivant une pente de crabotage faible (p2-p1)/(t2-t1), afin de laisser le temps à la chaîne de traction de remonter le couple de crabotage [d] et de provoquer le mur de crabotage.
Enfin, une troisième étape est la détection de l'arrêt de l'actionneur 1 durant un temps supérieur a un seuil, par exemple 50 millisecondes. L'arrêt temporaire de l'actionneur 1 se manifeste par une légère inflexion de la courbe P_{R} d'une durée Δt de l'ordre de 50 à 60 millisecondes. Avantageusement, des moyens de calcul du type d'un calculateur de commande de boîte de vitesses peuvent par exemple évaluer l'instant correspondant au milieu de l'intervalle de durée Δt portant l'inflexion de la courbe P_{R}, puis déduire une position réelle de début de crabotage p_{cr} correspondant à cet instant médian. Le calculateur de boîte ou éventuellement d'autres moyens de mémorisation, peuvent alors stocker la position p_{cr}. Comme illustré par la figure 4 qui suit, au passage de rapport suivant le pilotage de l'actionneur 1 sera adapté pour éviter l'apparition du mur de crabotage dont la position est maintenant connue.

La figure 4 illustre graphiquement un passage de rapport après apprentissage de la position de début de crabotage selon l'invention mise en oeuvre dans l'exemple de mécanisme de boîte de vitesses des figures 1 et 2. Il s'agit d'adapter le pilotage de l'actionneur 1 pour éviter l'apparition du mur de crabotage. La consigne de position de l'actionneur 1 pendant la phase [b] suit une pente plus raide, conformément à une nouvelle courbe de position de consigne P'_{C} qui est différente de la courbe P_{c} durant la phase [b] de vol libre. Pour cela, la vitesse de déplacement et le potentiel d'effort appliqués par l'actionneur 1 sont avantageusement augmentés de manière à atteindre plus rapidement une position p2' de crabotage, c'est-à-dire à un instant t2' tel que la durée t2'-t1 est plus courte que la durée t2-t1 ou encore tel que la pente de crabotage (p2'-p1)/(t2'-t1) selon P'_{c} est plus forte que la pente de crabotage (p2-p1)/(t2-t1) selon P_{c}. Aucun couple n'a alors le temps de remonter et de provoquer un mur de crabotage. Le crabotage est donc effectué sans arrêt sur les entrées de dents et une courbe P'_{R} représentant la position réelle de l'actionneur 1 ne présente aucune zone d'inflexion. La courbe P'_{R} suit sensiblement la courbe P'_{C}. Par ailleurs, la position p2' correspond à une position optimum de passage de rapport en butée, déduite de la position d'entrées de dents p_{cr}. En effet, la position d'arrêt p_{cr} à l'entrée des dents de crabots permet également de corriger la position finale du crabot en butée, par ajout de la profondeur des dents du crabot par exemple, et par la même occasion de corriger la position de l'actionneur 1 lorsque le rapport est complètement engagé. Pour cela, les mêmes moyens de calcul et de mémorisation que précédemment peuvent avantageusement être utilisés, comme le calculateur de commande de boîte de vitesses par exemple. L'invention permet donc d'auto-adapter l'ensemble de la grille de commande de la boîte de vitesses.

Le premier apprentissage de la grille de commande peut avoir lieu en usine, à l'assemblage de la boîte de vitesses. Sa fréquence de mise à jour en utilisant la méthode selon l'invention est variable. Elle dépend essentiellement des contraintes mécaniques appliquées à la boîte de vitesses, celles-ci pouvant par exemple être estimées lors d'essais en endurance du véhicule d'accueil.

La présente invention permet d'assurer à long terme le passage des rapports sans secousse ni bruit, ceci malgré l'usure des pièces mécaniques. Elle garantit la mise en butée de chaque rapport engagé tout au long de la vie du véhicule.

## Revendications

1. Procédé de détermination des positions de début (pcr) et de fin (p2') d'emboîtement d'un crabot (7) de boîte de vitesses, notamment de boîte de vitesses mécanique pilotée, l'emboîtement du crabot (7) permettant d'accoupler solidairement un pignon (6) à un arbre (8), le pignon (6) tournant librement autour de l'arbre (8) et le crabot (7) se déplaçant longitudinalement le long de l'arbre (8), **caractérisé en ce que** :
- le crabot (7) est déplacé le long de l'arbre avec une vitesse suffisamment faible pour qu'il s'immobilise temporairement (Δt) au moment du début de son emboîtement dans le pignon (6) ou dans l'arbre (8) ;
- la position du crabot en fin d'emboîtement correspondant à sa position de butée (p2') est déduite de la position d'immobilisation du crabot le long de l'arbre (8) correspondant à la position de début d'emboîtement (pcr).

2. Procédé selon la revendication 1, **caractérisé en ce que** :
- la position de début d'emboîtement (pcr) est la position atteinte par le crabot à un instant correspondant au milieu d'un intervalle d'inflexion temporaire (Δt) des positions successives du crabot (7) fournies par un capteur (2) ;
- la position de fin d'emboîtement du crabot (p2') est la somme de la position de début d'emboîtement du crabot (pcr) et d'une course de crabotage.

3. Boîte de vitesses, notamment boîte de vitesse mécanique pilotée, estimant une position de début de crabotage (pcr) et une position de fin de crabotage (p2') au passage d'un rapport, **caractérisée en ce qu'**elle comporte :
- un actionneur (1) pour déplacer directement ou indirectement un crabot (7) le long d'un arbre (8) avec une vitesse suffisamment faible pour qu'il s'immobilise temporairement (Δt) au moment du début de son emboîtement dans l'arbre (8) ou dans un pignon (6) correspondant au rapport à passer ;
- un capteur de position (2) du crabot (7) ;
- des moyens de calcul de la position d'immobilisation du crabot à partir des positions successives fournies par le capteur (2), la position d'immobilisation du crabot correspondant à sa position de début de crabotage (pcr) permettant de déduire la position du crabot en butée (p2') correspondant à sa position de fin de crabotage ;
- des moyens de mémorisation de la position de début de crabotage (pcr) et/ou de la position de fin de crabotage (p2').

4. Boîte de vitesses selon la revendication 3, **caractérisée en ce que** le capteur de position (2) est connecté à l'actionneur (1) dans une boucle fermée d'asservissement.

5. Boîte de vitesses selon la revendication 3 ou 4, **caractérisée en ce que** lorsqu'un rapport est passé sans estimer une position de début (pcr) et de fin de crabotage (p2'), le crabot (7) est déplacé le long de l'arbre (8) jusqu'à sa dernière position de fin de crabotage mémorisée (p2'), avec une vitesse suffisamment grande pour qu'il ne s'immobilise pas à sa dernière position de début de crabotage mémorisée (pcr).
